# EUROPEAN PATENT APPLICATION

(11) **EP 4 095 984 A1**
(43) Date of publication of application: **30.11.2022**
(21) Application number: 22173534.3
(22) Date of filing: 16.05.2022
(51) Int. Cl.: H01M 10/613, H01M 10/625, H01M 10/653, H01M 10/655, H01M 50/204

(54) **RECHARGEABLE BATTERY PACK FOR ELECTRICALLY POWERED VEHICLES AND METHOD FOR MAKING THIS BATTERY PACK**

(30) Priority: 27.05.2021 IT 202100013880
(71) Applicant: Permabond Engineering Adhesives Ltd., Hampshire SO21 1WP (GB)
(72) Inventor: ZAFFARONI, Giorgio, Suno (NO) (IT); GROSSI, Paolo, Paderno Dugnano (MI) (IT); PEACOCK, Jonathan, Andover (GB)
(74) Representative: Rastelli, Franco

(57) **Abstract**

A rechargeable battery pack, which has:
- a thin compact layer or skin (9) of matrix (4) on the surfaces of contact of the latter with the outer walls (8a) of the batteries (2) and the inner walls (8b) of the container (3), which promotes the heat dissipation from the batteries to the outside of the battery pack (1); and
- portions (10) of foamed or expanded matrix (4), which fill the empty spaces between the batteries and the walls of the container and which are suitable for reducing the total weight of the battery pack (1) compared with a compact non-foamed matrix.

In comparison with the prior art embodiments, the invention allows a rechargeable battery pack to be produced that combines a lower weight with the thermal conductivity values required to dispose of the heat generated in the battery recharge phase.

## Description

### BACKGROUND OF THE INVENTION

The present invention relates to a rechargeable battery pack for electrically-powered vehicles and the related production method.

The field of the invention is that of rechargeable batteries, used for example in electrically-powered vehicles, such as nickel-cadmium, lithium and similar batteries.

It is well known that the proper functioning of rechargeable batteries is compromised by temperature rises, normally associated with recharging operations.

To overcome this drawback, the rechargeable batteries are packaged in packs formed by a container, inside which the batteries are fixed by being submerged in a matrix of hardened resinous material, the structure of which is kept compact, in order to facilitate the dissipation of heat to the outside of the battery pack.

However, the above-described known solution has the drawback of considerably increasing the weight of the battery pack, with an impact on the total weight of the vehicle which can sometimes reach significant values.

To overcome this drawback, the incorporation of hollow glass spheres in the matrix formed by the filling resin of the battery pack is also known, for example as described in WO2018148282A1. This known solution allows the specific weight of the matrix to be lowered to a value of about 0.87 g/cm³, with the drawback, however, of also diminishing the efficiency of heat exchange with the external environment, bringing the matrix thermal conductivity to values not higher than 0.20 W/mK.

### SUMMARY OF THE INVENTION

The main object of the present invention is to provide a rechargeable battery pack for electrically-powered vehicles which, compared to similar prior art embodiments, has a lower weight, while maintaining thermal conductivity at the level that is required for regular operation of the batteries.

This and other objects are achieved with the battery pack and the method of claims 1 and 12, respectively. Preferred embodiments of the invention will be apparent from the remaining claims.

In relation to the known embodiments in this filed, the invention allows a rechargeable battery pack to be produced that combines a lower weight with thermal conductivity values sufficient for disposing of the heat generated in the battery recharge phase.

According to the invention, this result is achieved in particular thanks to the use of a synthetic resin matrix, having compact outer areas with high thermal conductivity, provided adjacent to or near the body of the batteries, i.e. the heat source, and inner foamed or expanded areas of lower weight than the outer ones.

### BRIEF DESCRIPTION OF THE DRAWINGS

These and other objects, advantages and characteristics result from the following description of some preferred embodiments of the battery pack of the invention illustrated, by way of non-limiting examples, in the figures of the attached drawing sheets.

In these:
- Figure 1 is a perspective view of a battery pack housed inside a closed container;
- Figure 2 illustrates an enlarged detail of the matrix of foamed material forming the battery pack of Figure 1;
- Figure 3 illustrates the battery pack of Figure 1, with a view of a contact area between the matrix and the batteries;
- Figure 4 illustrates a variant of embodiment of the foamed matrix of the battery pack of the invention;
- Figure 5 illustrates a specimen of the matrix of the battery pack according to the invention;
- Figure 6 illustrates a section of the matrix in Figure 5, with a view of the expanded inner part and of the compact outer surface of the specimen;
- Figure 7 illustrates the temperature curves measured on the matrix of Figure 5 and on a similar matrix of the prior art.

### DETAILED DESCRIPTION OF THE PREFERRED EMBODIMENTS

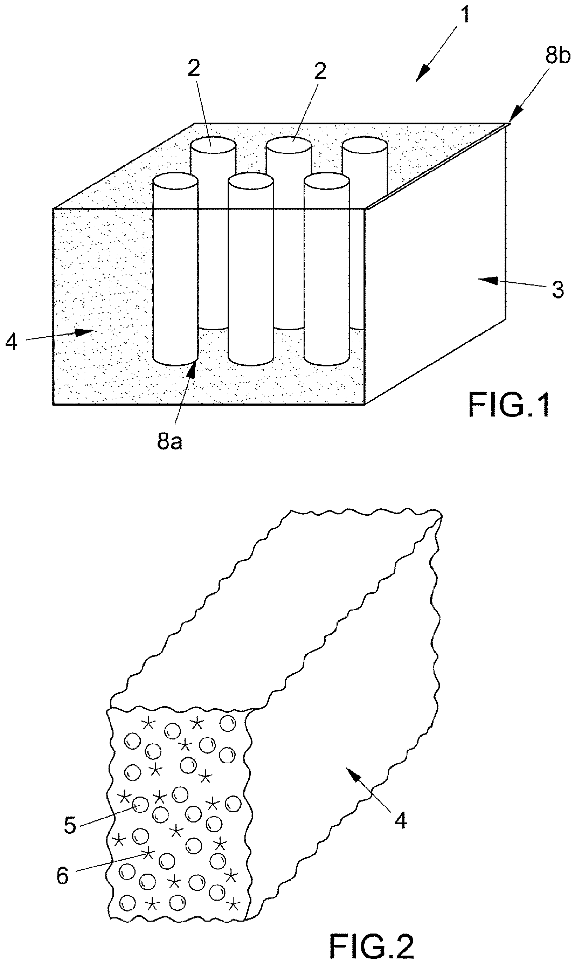

Figure 1 shows a pack 1 of rechargeable batteries, of the type normally used in the electric vehicle sector and which represent the source 2 of the heat to be dispersed, in turn housed inside a closed container 3, filled with the synthetic resin matrix 4 of the battery pack of the invention and having the function of retaining and fixing in position the batteries 2 inside the structure of the pack 1.

The filling matrix of the container 3 is obtained by chemical reaction between a synthetic resin and at least one hardening substance, so as to form a matrix 4 of hardened, substantially squeezed or compressed foamed resin in the volume of the closed container 3.

The resins suitable for making the matrix of the battery pack of the invention are, for example, two-component resins such as polyurethane resins, two-component silicones, etc. and preferably epoxy resins.

Suitable hardeners for the invention are, for example, polyamines, polyamides, polyols (in the case of polyurethanes, etc.), preferably formulated polyamines in the case of epoxy resins.

Typically present in the matrix of the battery pack of the invention are, from 90 to 50% by weight, resin and, from 10 to 50% by weight, hardener, including in both cases fillers, stabilizing additives, etc.

To the starting resin thus composed is also added, according to the invention, at least one foaming agent, from whose decomposition gas bubbles 5 are generated (such as hydrogen, air, CO₂ and the like) which remain incorporated inside the matrix 4, giving it an expanded or foamed structure.

Suitable foaming agents for the invention are water for polyurethanes, hydrogen silanes, etc., preferably polymethylhydrogen siloxanes, in amounts ranging from 0.1% to 10% by weight with respect to the total weight of the matrix.

According to the invention, also added to the starting resin is at least one solid filling agent, having a thermal conductivity greater than 1.5 W/mK and with the function of giving the matrix 4 the desired level of thermal conductivity, in particular to promote the dispersion of heat to the outside of the pack 1 while the batteries 2 are charging. Suitable filling agents for the invention are, for example, aluminum oxide, zinc oxide, boron nitride, aluminum trihydrate and the like, in the form of a powder 6 dispersible within the foamed resin mass in an amount ranging from 1% to 90% by weight, preferably from 10% to 80% by weight with respect to the total weight of the matrix. The solid filling agent can also be constituted by graphene, graphene oxide, copper, silver or other electrically conductive chemical compounds, having the purpose of providing the required thermal and electrical conductivity.

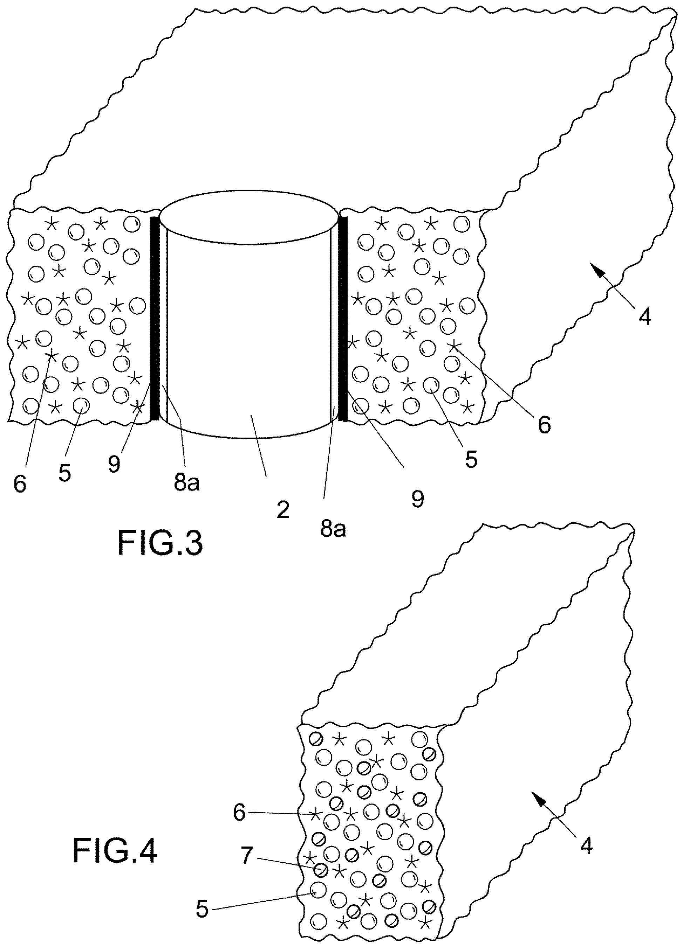

Advantageously, according to the invention, hollow glass spheres 7 (Figure 4) can also be added to the synthetic resin forming the matrix 4, for the purpose of further reducing the specific weight of the battery pack 1.

Once the starting resin and hardener are mixed together, the foaming agent begins to generate the bubbles that cause expansion of the matrix, thus filling the voids and cavities between the batteries 2 and the walls of the container 3.

At the same time, the pressure that the foaming process generates inside the closed container 3 of the battery pack 1 creates an expanded or foamed matrix 4 in which the following can be seen:
- a thin compact layer or skin 9 of matrix 4 on the contact surfaces between the latter and the outer walls 8a of the batteries 2 and the inner walls 8b of the container 3, which promotes the dissipation of heat from the batteries to the outside of the battery pack 1;
- portions 10 of foamed matrix 4, which fill the empty spaces between the batteries and the container walls and which reduce the total weight of the battery pack in comparison with a compact matrix without foamed parts.

The solid filling agent 6 used to form the matrix 4 contributes to the creation of preferential pathways of heat transmission promoting, together with the described formation of layers 9 of compact matrix, an increase in the latter's thermal conductivity, even though in the presence of foamed portions of the same.

It has also been observed that, despite the addition of the filling material 6, in considering the total weight of the individual components used, the matrix 4 of the battery pack of the invention is much lighter than traditional non-foamed ones.

The inventors have actually surprisingly discovered that it is possible to compensate for the loss of thermal conductivity of the matrix 4, due to its foamed structure and yet useful for the substantial reduction of weight of the battery pack 1, thanks not only to the contribution provided by the heat-conducting filling material 6, but also to the described formation of layers 9 of compact resin or resin with a minimum quantity of bubbles 5, occurring at the contact walls 8a, 8b of the matrix 4 with the batteries 2 and the container 3, respectively, mostly functional to the heat transfer to the outside of the battery pack 1.

In fact, squeezing of portions of the matrix 4 against the walls of the batteries 2 and of the container 3, due to the phenomenon described of expansion inside the same container kept closed, causes displacement of the bubbles 5 to the inside of the matrix 4, moving them away from the body of batteries and leaving a layer 9 of compact resin and therefore with a higher content of filling agent 6. In this way, a preferential pathway is generated for the heat to be dissipated to the outside of the battery pack, aided by the same phenomenon as that occurring on the inner walls of the container 3.

In particular, the described squeezing of the matrix 4 is achieved by the pressure generated by the contrast of the expansion of the matrix against the inner walls of the closed container 3 and against the outer walls of the batteries. Merely indicatively for the method of the invention, these pressure values vary between 1.2 and 1.6 bar.

A resin suitable for foaming according to the invention is composed of two parts which, once mixed, react with each other, forming the polymer and at the same time producing the gas which causes the resin to expand and form a foam. In the case of a polyurethane, one part is composed of a polyisocyanate, e.g. a derivative of diphenylmethanediisocyanate (MDI), while the other part contains a polyol, for example a polyethylene glycol (PEG) of suitable molecular weight, or a derivative thereof with a suitable water content (e.g. 0.5%). When the two parts are mixed, part of the isocyanate reacts with the water and produces CO₂ bubbles.

Another example of an expanding matrix, again consisting of two parts, has one part that contains an organopolysiloxane which incorporates at least two vinyl groups, a hydroxyl-terminated organopolysiloxane and a hydrosilylation catalyst. The other part is formed by a polymethylhydrogen siloxane of suitable length. When these two parts are mixed, the hydroxyl-terminated organopolysiloxane reacts with part of the polymethylhydrogen siloxane and generates hydrogen bubbles. The vinyl organopolysiloxane polymerizes by addition with methylhydrogen siloxane polyorganosiloxane.

The battery pack of the invention is prepared according to the following method.

The batteries 2 are first housed inside the container 3. Subsequently, the container 3 is closed with a lid and the resin forming the matrix 4 is injected into it, so as to fill the empty spaces between the batteries and the container itself. Alternatively, the resin can be poured quickly into the container 3, which is then closed.

According to the invention, the volume V1 of these empty spaces inside the battery pack 1, when measured at room temperature and atmospheric pressure, is smaller than the volume V2 that the matrix 4 occupies when it is freely and unconfinedly expanded during polymerization and this causes the resin to be squeezed against the outer walls 8a of the batteries and against the inner walls 8b of the container 3. Once the gel point is reached, the resin expands no further and is left to rest until polymerization is complete.

For sake of comparison, an example of formulation of the expanding resin forming the matrix 4 of the battery pack of the invention has been provided (Example I), comprising a part A in which the expanding agent polymethylhydrogen siloxane (PMHS) has been introduced and which, on the other hand, is missing from the resin of the prior art (Example II).

The other components in the mixture of the resins of the cited examples are:
- DGEBA = DiGlycidyl Ether of Bisphenol A
- DGEBF = DiGlycidyl Ether of Bisphenol F
- Reactive Diluent = Reactive Epoxy Diluent
- Epoxylane = Glycidyl-*3-oxypropyl trimethoxy* silane
- KR2300 = Titanium Dioxide
- T60 = Tabular aluminum oxide filling agent (thermal conductivity 29 W/mK)
- Fumed Silica = Flame Silica
- Accelerant = Tertiary Amine
- ATH = Trihydrate alumina

| **Example I (Expanding-Invention)** | |
|---|---|
| **Component part A** | **% Weight** |
| DGEBA | 31.20 |
| PMHS | 1.00 |
| Reactive Diluent | 3.00 |
| Epoxy Silane | 0.50 |
| Suspending rheological agent | 1.00 |
| KR2300 | 1.00 |
| T60 | 62.30 |
| Fumed Silica | 0.70 |

| **Component part B** | **%** |
|---|---|
| Polyamide | 12.80 |
| Cycloaliphatic Amine | 15.20 |
| T60 | 68.60 |
| Fumed Silica | 2.70 |
| Accelerant | 0.70 |

| **Example II (Non-expanding-Prior art)** | |
|---|---|
| **Component part A** | **% Weight** |
| DGEBA | 36.20 |
| Epoxy Silane | 0.50 |
| Suspending rheological agent | 0.30 |
| ATH | 62.30 |
| Fumed Silica | 0.70 |

| **Component part B** | **%** |
|---|---|
| Polyamide | 15.60 |
| Carbon Black | 0.20 |
| Polyamine | 12.20 |
| T60 | 68.60 |
| Fumed Silica | 2.70 |
| Accelerant | 0.70 |

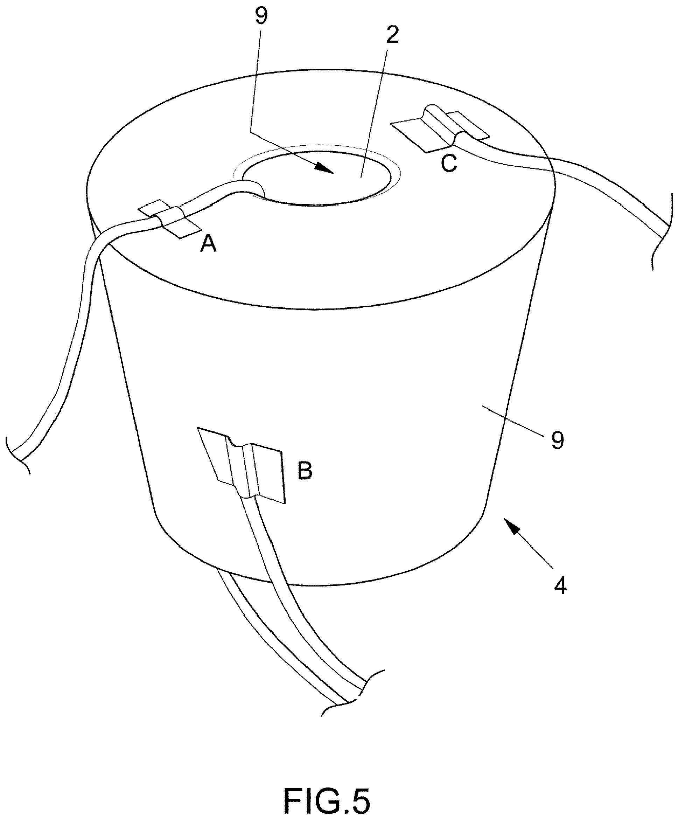

100 g of component A of Example I of the invention were mixed with 50 g of component B. The resin of Example I of the invention was then caused to react in a closed cylindrical container, having a volume V1, measured at room temperature and atmospheric pressure, smaller than the free expansion volume V2 of the resin in an open environment. Inside the container there is a metal tube of minimum thickness, treated on its surface with an anti-adhesive release agent. At the end of the polymerization, the inner metal tube was removed and the specimen of expanded matrix 4 illustrated in Figure 5 was taken out of the cylindrical container.

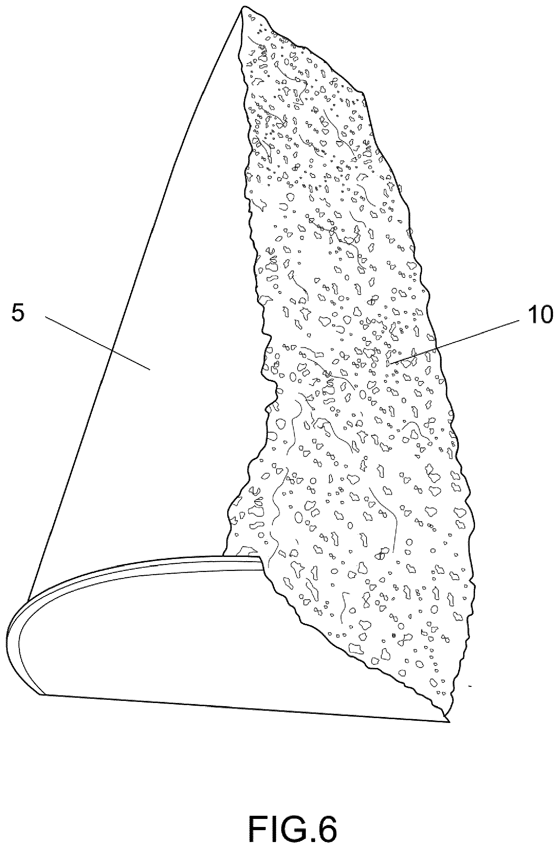

As better illustrated in Figure 6, on the specimen of matrix 4 thus obtained, a spongy inner part 10 can be seen together with outer parts consisting of a compact layer 9, in the form of a compact resin skin, substantially free of cavities or bubbles, located on the contact surfaces of the matrix with the walls of the outer cylindrical container and of the inner tube.

A sample of suitable dimensions was subsequently obtained from a section of the specimen of matrix 4 of Figure 5. Layer 9 was then removed with a slight abrasion. The density and thermal conductivity of this sample were measured with a C-Therm TCI instrument (Test Method Modified Transient Plane Source Conforms to ASTM D7984). Similar measurements were also carried out on the non-expanded matrix obtained from the resin of Example II of the prior art, obtained as described above for Example I of the invention.

The results of these measurements are reported in the following table, from which it can be seen that the thermal conductivity values on the specimen of expanded matrix of the battery pack of the invention are comparable with those of the non-expanded matrix of the prior art, but the density values are considerably lower:

| | **Density (g/cm³)** | **Thermal conductivity (W/mK)** |
|---|---|---|
| **Example II (Prior Art)** | 2.00 | 0.80 |
| **Example I (Invention)** | 0.62 | 0.30 on the foam - 0.80 on the skin - Overall, depending on the geometry and thickness of the matrix |

In the following table, Example I of the invention was also compared with the material described in "Formulation 5" in WO2018148282A:

| **Example I (Expanding-Invention)** | | WO2018148282A1**-Formulation 5** | |
|---|---|---|---|
| **Component part A** | **% Weight** | **Component part A % Weight** | |
| DGEBA | 18.40 | Organopolysiloxane | 80.0396 |
| PMHS | 1.00 | Catalyst | 0.1604 |
| DGEBF | 12.80 | Hollow glass spheres | 19.80 |
| Reactive Diluent | 3.00 | | |
| Epoxy Silane | 0.50 | | |
| Suspending rheological agent | 0.30 | | |
| KR2300 | 1.00 | | |
| T60 | 62.30 | | |
| Fumed Silica | 0.70 | | |

| **Component part B** | **%** | **Component part B** | **%** |
|---|---|---|---|
| Polyamide | 12.60 | Organopolysiloxane A1 | 65.6161 |
| Carbon Black | 0.20 | Organopolysiloxane B1 | 15.6831 |
| Cycloaliphatic Amine | 15.20 | Organopolysoloxane B2 | 1.8999 |
| | 68.60 | Polymerization speed con-troller | 0.0010 |
| T60 | | | |
| Fumed Silica | 2.70 | Hollow glass spheres | 16.28 |
| Accelerant | 0.70 | | |

In the following table, the density and thermal conductivity values of the matrix obtained with the resin of Example I of the invention are compared with the corresponding density and thermal conductivity values of the material described in WO2018148282A1, "Formulation 5":

| | **Density (g/cm³)** | **Thermal conductivity (W/mK)** |
|---|---|---|
| WO2018148282A1 - **Formulation 5** | 0.55 | 0.13 |
| **Example I (Invention)** | 0.62 | 0.30 on the foam - 0.80 on the skin - Overall, depending on the geometry and thickness of the matrix |

In this table, it can be seen that the expanded matrix used in packaging of the battery pack of the invention has a higher thermal conductivity than that reported in the aforementioned prior art publication, albeit with comparable density values.

To verify the effect of the compact layer 9 present on the matrix 4 of the battery pack of the invention, the following comparative experiment was carried out on the specimen of Figure 5.

The expanded matrix 4 was conditioned in a ventilated oven at 30°C for a time sufficient to ensure that thermal equilibrium was achieved. Keeping the matrix always in a temperature-controlled environment, hot water was placed in the inner cavity of the matrix, which essentially configures the source 2 of the heat to be dissipated, subsequently monitoring the change in temperature in the three positions of the thermocouples: A (inner surface), B (outer wall), C (walls of the upper and lower bases of the cylindrical specimen) indicated in Figure 5.

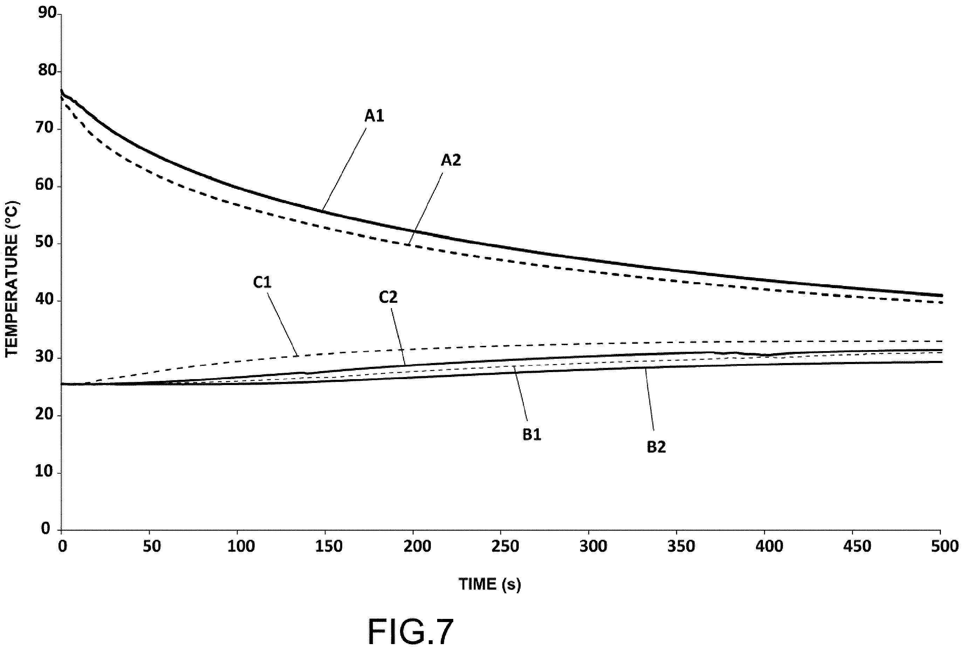

The same measurements were repeated, on the specimen of Figure 5, after removal of the outer layer of compact resin 9 by slight abrasion from the upper and lower surfaces C. Removal of these layers causes a sort of thermal break in the conduction of heat through the matrix, as illustrated in particular by the temperature curves in the graph of Figure 7.

From the curves in this figure, the greater efficiency of the matrix 4 is evident in the removal of heat from the water (curve A1), at position A of the specimen of Figure 5, provided with layers 9 of compact resin, when compared with the "without skin" option (curve A2). The same efficiency is shown by the thermocouple at position C. In fact, the "with skin" solution (curve C1) removes more heat than the "without skin" solution (curve C2). In the curves B1 and B2 of the specimen of Figure 5, corresponding to the temperatures measured at position B, the difference is less pronounced, as they are further away from the heat source (position A).

Modifications may be made to the invention as described and illustrated in the figures above in order to produce variants which, nevertheless, are still within the scope of the following claims. Thus, for example, the invention could be used to remove heat from engine parts in means of transport, such as for example airplanes, helicopters, etc., as well as in other devices of the electric recharge type in general.

## Claims

1. Rechargeable battery pack, in particular for rechargeable batteries of electrically-powered vehicles, comprising batteries (2) housed inside a closed container (3), **characterized in that** said battery pack has a matrix (4) of foamed or expanded resin having:
- a thin compact layer or skin (9) of matrix (4) on the contact surfaces of said matrix (4) with the outer walls (8a) of said batteries (2) and the inner walls (8b) of said closed container (3), which promotes the dissipation of heat to the outside of said matrix (4), in which said layer (9) is obtained by squeezing the corresponding portions of matrix (4) against said walls (8a, 8b) due to expansion, inside said closed container (3), of said matrix (4);
- portions (10) of expanded matrix (4) which fill the empty spaces between the layer (9) formed on the outer walls of the batteries (2) and the layer (9) formed on the inner walls of the closed container (3) and which are suitable for reducing the total weight of said matrix in comparison with a compact non-foamed matrix.

2. Battery pack according to claim 1, **characterized in that** said matrix (4) is obtained by chemical reaction between a synthetic resin and at least one hardening substance, so as to form a matrix (4) of hardened, squeezed or compressed foamed resin inside the volume of said closed container (3).

3. Battery pack according to claim 2, **characterized in that** said resins are two-component resins.

4. Battery pack according to claim 2, **characterized in that** said at least one hardening substance consists of polyamines, polyamides, polyols and the like.

5. Battery pack according to claim 2, **characterized in that** said matrix (4) comprises from 90 to 50% by weight of resin and from 10 to 50% by weight of hardening substance, including in both cases fillers, stabilizing additives, etc.

6. Battery pack according to claim 1, **characterized in that** said matrix (4) further contains at least one foaming agent, present in one of the two parts of said two-component resins and which reacts with at least one different chemical compound present in the other part.

7. Battery pack according to claim 6, **characterized in that** said at least one foaming agent is present in amounts between 0.01% and 10% by weight with respect to the total weight of the matrix.

8. Battery pack according to claim 1, **characterized in that** said matrix (4) further comprises at least one solid filling agent such as aluminum oxide, aluminum trihydrate, zinc oxide, etc., having thermal conductivity greater than 1.5 W/mK and having the function of giving the matrix (4) the required level of thermal conductivity.

9. Battery pack according to claim 1, **characterized in that** said matrix (4) further comprises at least one solid filling agent such as copper, silver, graphene or other electrically conductive chemical compounds, having the purpose of providing the required thermal and electrical conductivity.

10. Battery pack according to claim 9, **characterized in that** said at least one filling agent is in the form of a powder (6), dispersed in said matrix in amounts between 1% and 90% by weight with respect to the total weight of the matrix.

11. Battery pack according to claim 1, **characterized in that** the volume (V1) of the empty spaces between the batteries and the inner walls of the closed container (3), measured at room temperature and atmospheric pressure, is smaller than the expansion volume (V2) that said matrix (4) would occupy in an open environment or in free conditions.

12. Method for producing the battery pack according to one or more of the preceding claims, **characterized in that** it includes the injection of said synthetic resin inside the aforementioned closed container (3) having a volume (V1), measured at room temperature and atmospheric pressure, smaller than the expansion volume (V2) of said resin in an open environment or in free conditions.

13. Method according to claim 12, **characterized in that** it includes the squeezing of said matrix (4) against the outer walls (8a) of the batteries (2) and against the inner walls (8b) of the container (3) of said battery pack (1), in which said squeezing occurs under the pressure generated by the contrast of the expansion of the matrix (4) against said inner walls of the closed container (3) and against said outer walls of the batteries (2).
